Europäisches Patentamt

European Patent Office

Office européen des brevets

(19)

(11) Veröffentlichungsnummer: **0 031 110**
**B1**

(12) **EUROPÄISCHE PATENTSCHRIFT**

(45) Veröffentlichungstag der Patentschrift: **20.02.85**

(51) Int. Cl.⁴: **G 01 S 5/18, G 01 S 7/62**

(21) Anmeldenummer: **80107883.3**

(22) Anmeldetag: **13.12.80**

(54) Vorrichtung zum Erzeugen eines Lagebildes einer Gefechtslage auf See.

(30) Priorität: **24.12.79 DE 2952315**

(43) Veröffentlichungstag der Anmeldung:
**01.07.81 Patentblatt 81/26**

(45) Bekanntmachung des Hinweises auf die
Patenterteilung:
**20.02.85 Patentblatt 85/08**

(84) Benannte Vertragsstaaten:
**FR GB IT NL**

(56) Entgegenhaltungen:
**DE-A-1 548 521**
**DE-A-1 581 070**
**DE-A-2 918 930**
**DE-B-1 623 356**
**DE-B-1 623 658**
**US-A-3 016 530**
**US-A-3 123 824**

(73) Patentinhaber: **Fried. Krupp Gesellschaft mit beschränkter Haftung**
**Altendorfer Strasse 103**
**D-4300 Essen 1 (DE)**

(72) Erfinder: **Arens, Egidius**
**Wittenberger Strasse 22**
**D-2807 Achim (DE)**
Erfinder: **Hampe, Christoph**
**Erlenstrasse 46**
**D-2875 Ganderkesee 3 (DE)**
Erfinder: **Anding, Norbert**
**Franklinstrasse 14**
**D-2800 Bremen 33 (DE)**
Erfinder: **Karlowsky, Ingo**
**Schneidhainer Strasse 1**
**D-2800 Bremen 44 (DE)**
Erfinder: **Meyersieck, Manfred**
**Häsefeld 3**
**D-2815 Daverden (DE)**
Erfinder: **Schwarz, Hans Dieter**
**Russowweg 6**
**D-2800 Bremen 33 (DE)**
Erfinder: **Leisterer, Reinhard**
**Stadskanaal 4**
**D-2804 Lilienthal (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 031 110 B1

## Beschreibung

Die Erfindung betrifft eine Vorrichtung zum Erzeugen eines Lagebildes einer Gefechtslage auf See der im Oberbegriff des Anspruchs 1 genannten Art.

Für eine derartige Vorrichtung zum Erzeugen einer Gefechtslage ist es erforderlich, die von Sensoren aufgenommenen Meßwerte für eine Anzeige in der Art und Weise aufzubereiten, daß ein Beobachter sein eigenes und fremdes Bewegungsverhalten schnell erfassen, beobachten und über taktische Konsequenzen entscheiden kann.

Es ist bekannt, Peilungen und Entfernungen zu messen und die Meßergebnisse auf einem Zeichentisch ggf. in einer Seekarte aufzuzeichnen. Diese Art und Weise der Darstellung benötigt besonders viel Zeit, so daß die für eine Lagebeurteilung erforderlichen Informationen nur unzureichend und nicht rechtzeitig zur Verfügung stehen.

Es ist aus der US—PS—3 981 908 auch ein Zielauswertegerät für den Gebrauch mit Schiffsradar bekannt, das von Zielen Entfernungsinformationen für eine Vielzahl von Entfernungsbereichen erzeugt. Dieses Zielauswertegerät bildet zwei Impulse, die die azimutale Ausdehnung des Zieles kennzeichnen und getrennt in ihren Entfernungsbereichen gespeichert werden. Daraus werden Geschwindigkeit und Kurs der Ziele abgeleitet und als Bewegungsvektoren angezeigt. Dieses Zielauswertegerät hat als Schiffsradar mit einer aktiven Sendeanlage den Nachteil, daß es aktiv ortet und bei Betrieb die Position des eigenen Fahrzeugs verraten wird. Die militärische Bedeutung des Zieles ist nicht erkennbar, so daß der Beobachter weitere Informationen benötigt, wie er das Bewegungsverhalten des eigenen Fahrzeugs einrichten soll, um Bekämpfungsmöglichkeiten für fremde Ziele zu erkennen.

Aus der DE—OS—29 18 930 ist ferner eine Kollisionsschutzeinrichtung zur Abschätzung von Manövern des eigenen Wasserfahrzeugs bekannt, um Kollisionen mit anderen Wasserfahrzeugen zu verhüten. Die Einrichtung arbeitet aktiv durch Aussenden von impulsförmiger elektromagnetischer Wellenenergie eines eigenen Radargerätes. Die empfangene Wellenenergie ist dabei stets die an den Zielen reflektierte Energie des eigenen Radargerätes. Aus den empfangenen Radarimpulsen werden Peildaten und Entfernungsdaten für eine übliche P- oder PPI-Darstellung gewonnen. Auf die so gewonnenen Daten sprechen Recheneinrichtungen zur Berechnung geschlossener Bereiche an, die zur Vermeidung von Kollisionen von dem eigenen Wasserfahrzeug nicht befahren werden dürfen und die in die PPI-Darstellung mit eingeblendet werden. Form und Lage der Bereiche sind dabei von dem Bewegungsverhalten insbesondere von Kurs und Geschwindigkeit, des eigenen und der fremden Wasserfahrzeuge bestimmt.

Eine Einrichtung mit einem aktiv ortenden, impulsförmige Wellenenergie abstrahlenden Radargerät ist wegen seiner hohen Eigenverratswahrscheinlichkeit für die Ermittlung der Daten einer Gefechtslage ungeeignet. Ebenso ist die dabei angegebene Ermittlung von Bereichen möglicher Kollisionen, die sich aufgrund realer und fiktiver Daten mehrerer Fahrzeuge untereinander ergeben, für eine Gefechtslagedarstellung unbrauchbar, da in der Lagedarstellung jeweils die Zustände jedes einzelnen Fahrzeugs unabhängig von etwaigen Kollisionen angezeigt werden sollen.

Eine weitere Kollisionsschutzeinrichtung ist auch aus der DE—OS—15 81 070 bekannt. Dabei werden die Ziele ebenfalls mit Radarimpulsen geortet und zusammen mit konischen Streubereichen entlang ihrer extrapolierten Wege dargestellt, um Kollisionsmöglichkeiten zu beurteilen.

Bereits wegen der Aktivortung ist eine derartige Kollisionsschutzeinrichtung zur Gefechtslagedarstellung ungeeignet, doch auch eine dieser Einrichtung entsprechende Darstellung von Streubereichen, die sich aus einer Vielzahl von sog. "stehenden Peilungen" unter Berücksichtigung der Fehler der Radarortung ergeben, ist in einer Gefechtslagedarstellung nicht anwendbar, da sie zu einer völligen Überladung der Anzeige und zu einer erschwerten Beobachtung durch den Operator führt.

Aus der DE—AS—16 23 658 ist eine Anordnung bekannt, die nur zum Empfang von Radarsignalen vorgesehen ist. Von den empfangenen Radarsignalen werden dann die drei Parameter Amplitude, Frequenz und Seitenwinkel bestimmt und derart auf einem Bildschirm einer Kathodenstrahlröhre dargestellt, daß mit der Frequenz und dem Seitenwinkel als Koordinaten der Anfangspunkt eines Striches bestimmt wird, dessen Länge von der gemessenen Amplitude abhängt. Mit einer solchen Anordnung zur Auswertung von Empfangssignalen und zur Darstellung auf einem Bildschirm kann eine Gefechtslage, in der zumindest Positionen von Zielen angezeigt werden müssen, nicht dargestellt werden.

Der erfindung liegt die Aufgabe zugrunde, eine Vorrichtung zum Erzeugen eines Lagebildes einer Gefechtslage auf See der eingangs genannten Art zu schaffen, welche die erforderliche Vermessung der Ziele ohne Eigenverrat durchführt, aus den zur Verfügung stehenden Meßdaten eine Vielzahl von Zusatzinformationen ermittelt, das Lagebild schnell generiert und die in ihm enthaltenen Gefechtsinformationen in einer solchen Form und Art und Weise zur Anzeige bringt, daß der Beobachter schnell und ohne die Notwendigkeit kombinatorischer Verknüpfungen von Einzelinformationen eine vollständige Übersicht über die tatsächliche Gefechtslage mit erforderlicher Detailkenntnis gewinnt.

Diese Aufgabe wird bei einer Vorrichtung zum Erzeugen eines Lagebildes einer Gefechtslage auf See der im Oberbegriff des Anspruchs 1 genannten Art erfindungsgemäß durch die Merkmale im Kennzeichenteil des Anspruchs 1 gelöst.

Bei der Darstellung einer Gefechtslage gemäß der Erfindung werden geortete Ziele, das eigene Fahrzeug und zur Verdeutlichung der Gefechtslage erforderliche Bildinformationen, wie Koordinaten oder eine Legende, auf einem elektronischen Anzeigegerät durch Helligkeitssignale gekennzeichnet. Es ist bekannt, daß auf einem Fahrzeug Gerätekombinationen, d.h. Wandleranordnungen und zugehörige Signalverarbeitungsanlagen zum Peilen und zum Bestimmen der Entfernung eines Ziels, das Wellenenergie abstrahlt, in Abhängigkeit von der Richtung zur Verfügung stehen, so daß Winkel- und Entfernungsinformationen von dieser Gerätekombination geliefert werden. Diese Gerätekombination nutzt zur Entfernungsmessung das Meßverfahren einer Kreuzpeilung mit versetzt angeordneten Wandlern. Ein derartiges Meßverfahren ist in der deutschen Patentschrift 567 322 beschrieben.

Andererseits werden zur Ermittlung der Winkelinformation vorzugsweise Wandleranordnungen zur Rundumpeilung eingesetzt, wie es beispielsweise für das Peilen von Geräuschquellen in der deutschen Patentschrift 14 41 482 beschrieben ist. Dort wird nämlich eine Panoramasonaranlage beschrieben, die als Winkelinformationen Azimut und Elevation der einfallenden Wellenenergie bestimmt.

In Verbindung mit einer Winkelauswerteanlage, die über einen vorgegebenen Zeitraum den eigenen Kurs und die eigene Geschwindigkeit berücksichtigt, könnte diese Anlage ebenfalls zum Bestimmen der Entfernungsinformationen, d.h. als Entfernungsmeßanlage eingesetzt werden, wie es beispielsweise in der deutschen Patentschrift 887 926 beschrieben ist. Dort werden nämlich zur passiven Bestimmung von Abstand, Kurs und Geschwindigkeit einer Geräuschquelle von ruhenden oder beweglichen Meßpunkten aus mehrere Peilungen durchgeführt. Zeitabstände zwischen mehreren Peilungen werden gemessen und daraus bei bekannter oder geschätzter Fahrtgeschwindigkeit der Abstand zur Geräuschquelle bestimmt. Dieses Meßverfahren verwendet das Prinzip der Versegelungspeilung.

Die in vorgebbaren Zeitintervallen aus Peilung und Entfernung bestimmten Positionen der Ziele werden in einem Bildspeicher abgelegt. Dabei können Positionen aus vergangenen Zeitintervallen oder vorausberechnete Positionen für zukünftige Zeitintervalle gespeichert und für eine Generierung und Darstellung von Zielbahnen verwendet werden, wie bereits vorgeschlagen wurde (FR—A—24 59 486, GB—A—20 52 910 u. NL—A—80 03 201; sämtlich nicht vorveröffentlicht, aber mit älterer Priorität).

Die Peilung und Entfernung der Peil- und Entfernungsmeßanlagen weisen Meßtoleranzen auf. Aus den Meßtoleranzen werden um die Positionen jedes Ziels Meßunsicherheitsgebiete dargestellt. Ermitteln mehrere Meßanlagen von gleichen Zielen Meßwerte mit unterschiedlichen Meßtoleranzen, so werden die Meßergebnisse unterschiedlich bewertet und daraus die Meßunsicherheitsgebiete abgeleitet.

Passive Entfernungsmeßanlagen nach dem Prinzip der Kreuzpeilung verlangen einen möglichst großen Abstand ihrer Sensoren (vgl. DE—PS—567 322). Daraus folgt, daß die Entfernungsmessung vor- und achteraus sehr große Meßtoleranzen gegenüber Entfernungsmessungen querab aufweisen und sich die Meßunsicherheitsgebiete deswegen erheblich unterscheiden und das eigene Fahrzeug gegebenenfalls gedreht werden muß, wenn ein in dem Meßunsicherheitsgebiet befindliches Ziel von großem Interesse ist.

Weitere vorteilhafte Ausgestaltungen der Erfindung ergeben sich aus den in den obhängigen Ansprüchen 2 bis 8 angegebenen Merkmalen.

So ist gemäß Anspruch 5 zur Verbesserung der Darstellung der Gefechtslage eine passive Peilanlage zur Peilung und Auswertung von Empfangssignalen aktiver Sendeanlagen in Form einer Impulspeilanlage vorgesehen. Aktive Sendeanlagen senden im allgemeinen in einem Frequenzbereich, der höher als der von Panoramasonaranlagen zur Peilung von Gerauschquellen ist, so daß hierfür besondere Wandlerkonfigurationen und Signalverarbeitungseinrichtungen vorzusehen sind. Das Ergebnis der Peilung wird durch einen besonders hervorgehobenen Peilstrich, der vom eigenen Fahrzeug her auf das Ziel verläuft, angezeigt. Eine solche Peilanlage ist bereits aus der deutschen Patentschrift 17 66 755 bekannt.

Die mit der Erfindung erzielbaren Vorteile bestehen darin, daß sich das eigene Fahrzeug nicht durch Sendesignale einer Rückstrahlortungsanlage verrät, da die Darstellung der Gefechtslage allein aus Empfangssignalen von Wasserschallhorchanlagen, d.h. passiven Peil- und Entfernungsmeßanlagen aufgebaut wird, aus denen alle weiteren Zeildaten für das Lagebild einer Gefechtslage, wie Entfernung, Position oder Klassifizierungsmerkmalen, berechnet werden. Weiterhin werden Ziele nicht mehr nacheinander durch Ausrichten sämtlicher Peilanlagen auf nur ein einziges Ziel vermessen, sondern die Zieldaten sämtlicher Ziele werden gleichzeitig bestimmt und im Entfernungsbereich in einer für ein Lagebild besonders geeigneten graphischen Form, wie Zielbahnen, Vektoren, Peilstrich oder Markierungen, zur Anzeige gebracht. Durch die Zusammenfassung sämtlicher Zieldaten zu einem einzigen Lagebild wird ein hoher Automatisierungsgrad erreicht und insbesondere werden Übertragungsfehler auf die Aufzeichnungsvorrichtung ausgeschlossen, so daß ohne zusätzliche Hilfsmittel stets ein aktuelles Lagebild der Gefechtslage gegeben ist.

Die Generierung von Meßunsicherheitsgebieten—wie bei Kollisionsschutz-Radaranlagen am sich bekannt—ist für ein Lagebild besonders vorteilhaft, da diese Gebiete so berechnet sind, daß sich ein Ziel mit an Sicherheit grenzender Wahrscheinlichkeit in dem Meßunsicherheitsgebiet befindet. Aus der Form und Orientierung des Meßunsicherheitsgebietes bezüglich des eigenen Fahrzeugs ist zu entnehmen, ob sich das eigene Fahrzeug in einer günstigen Meßposition bezüglich eines lohnenden Zieles befindet. Ggf. kann dann das eigene Fahrzeug in eine günstige Meßposition manöveriert werden, in der die Meßtoleranzen geringer sind, so daß sich Fläche und Form des zugehörigen Meßunsicherheitsgebietes verkleinern. Die Generierung von Meßunsicherheitsgebieten in einem Lagebild gibt somit einem Beobachter erhöhte Sicherheit für seine Entscheidung über eigenes Bewegungsverhalten und über die Bekämpfbarkeit von Zielen.

Die Verwendung eines Klassifizierungsrechners zur Zeit- und/oder Frequenzanalyse ist besonders vorteilhaft, da sie eine objektive Vergleichbarkeit von Frequenz- und Signaleigenschaften ergibt. Der automatische Vergleich aktueller und gespeicherter Zieldaten erfolgt dabei wesentlich schneller und sicherer als die Suche eines Beobachters in Tabellenwerken, so daß insbesondere für kritische Ziele eine frühzeitige und exakte Identifizierung gegeben wird.

Der Erfindungsgegenstand ist an einem Ausführungsbeispiel in der Zeichnung dargestellt und wird im folgenden näher beschrieben. Es zeigen:

Fig. 1 die Darstellung einer Gefechtslage auf einem Bildschirm,

Fig. 2 ein Blockschaltbild.

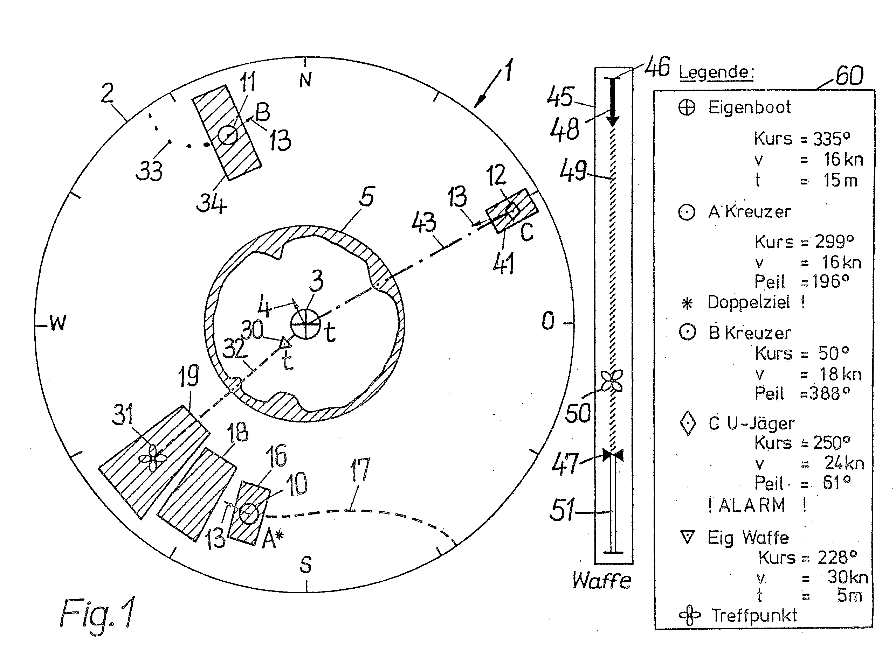

Fig. 1 zeigt einen Bildschirm 1 eines Anzeigegerätes, auf dem eine Gefechtslage nach dem erfindungsgemäßen Verfahren dargestellt wird, wie sie beispielsweise von einem U-Boot beobachtet wird. Die Darstellung erfolgt in Polarkoordinaten nordbezogen innerhalb einer Kompaßrose 2 für einen gewählten Entfernungsbereich. Die Position des eigenen Fahrzeugs 3, eines U-Boots, ist in der Bildmitte durch ein Symbol in Form eines Kreises mit einem Kreuz dargestellt. An dieses Symbol ist ein Eigenbewegungsvektor 4 vom Mittelpunkt des Symbols aus abgetragen, dessen Richtung den wahren Kurs des eigenen Fahrzeugs 3 und dessen Länge ein Maß für seine Geschwindigkeit angibt. Die zusätzliche Markierung durch den Buchstaben t weist aus, daß das eigene Fahrzeug 3 getaucht ist, dessen Tiefe neben dem Buchstaben t in der Legende ausgewiesen ist.

Konzentrisch um die Position des eigenen Fahrzeugs 3 ist eine Panoramaabbildung 5 einer passiven Peilanlage angezeigt. Diese passive Peilanlage mißt rundum den Geräuschpegel und stellt ihn mit nach innen zunehmenden Amplituden dar. Passive Peilanlagen dieser Art sind besonders empfindlich für die Richtungsanzeige noch entfernt liegender Geräuschquellen. Diese Anzeige ist unabhängig vom dargestellten Entfernungsbereich der Gefechtslage.

Die Gefechtslage um das eigene Fahrzeug 3 ist durch Positionen und Bewegungsverhalten von A-Ziel 10, B-Ziel 11 und C-Ziel 12 bestimmt. Die Position des A-Ziels 10 wird symbolisch durch einen Kreis gekennzeichnet, an den als weiteres Unterscheidungsmerkmal der Buchstabe A angetragen ist. Mit den gleichen Vereinbarungen wie für den Eigenbewegungsvektor 4 beschreiben Zielbewegungsvektoren 13 Kurse und Geschwindigkeiten der Ziele 10 bis 12.

Um die Position des A-Ziels 10 ist ein viereckiges Meßunsicherheitsgebiet 16 angetragen. Das Meßunsicherheitsgebiet 16 wurde aufgrund der Meßtoleranzen der Peil- und Entfernungsmeßanlage bestimmt. Entsprechend den größeren Meßtoleranzen der Entfernungsmeßanlage besitzt es eine größere Ausdehnung in radialer Richtung, hingegen ist die Ausdehnung in azimutaler Richtung geringer, was auf eine bessere Auflösung der Peilanlage schließen läßt. Die wirkliche Position des A-Ziels 10 kann sich grundsätzlich an allen Punkten dieses Meßunsicherheitsgebietes 16 befinden.

Da das A-Ziel 10 schon während einer längeren Zeit im Beobachtungsbereich der passiven Peil- und Entfernungsmeßanlagen des eigenen Fahrzeugs 3 liegt, kann sein Bewegungsverhalten verfolgt werden. Aus vorausgegangenen Positionen wird eine Zielbahn 17 dargestellt, die den Weg des Schwerpunktes der vorausgegangenen Meßunsicherheitsgebiete kennzeichnet. Weiterhin wurden aus dem bisherigen Bewegungsverhalten des A-Ziels 10 Zielerwartungsgebiete 18 und 19 vorausberechnet, die eine ähnliche Form wie das Meßunsicherheitsgebiet 16 haben. Die zunehmende Vergrößerung der Flächen der Zielerwartungsgebiete 18 und 19 auch gegenüber dem Meßunsicherheitsgebiet 16 berücksichtigt die Unsicherheiten des zukünftigen Bewegungsverhaltens des A-Ziels 10, insbesondere die Möglichkeiten durch Manöver, d.h. zum Beispiel durch Kurs- oder Geschwindigkeitsänderungen in andere Positionen dieser Darstellung der Gefechtslage zu gelangen.

Von dem eigenen Fahrzeug 3 ist eine Bekämpfung des A-Ziels 10 durch eine Waffe 30 vorgesehen. Für einen Treffpunkt 31 der Waffe 30 mit dem A-Ziel 10 wurde eine Position ermittelt, die in dem Zielerwartungsgebiet 19 liegt und durch ein Treffpunktsymbol in Form eines Propellers gekennzeichnet ist. Die Bahn 32 der Waffe 30 wird als gestrichelte Linie vom eigenen Fahrzeug 3 über die Waffe 30 zum Treffpunkt 31 hin angezeigt. Die Waffe 30, ein Torpedo, ist durch ein Dreieck und einen Buchstaben t gekennzeichnet, der darauf hinweist, daß die Waffe 30 in einer bestimmten Tiefe operiert.

Das B-Ziel 11, das sich in einer rechtweisenden Peilung von 350° befindet, ist an seiner Position—wie auch das A-Ziel 10—durch einen Kreis symbolisch gekennzeichnet. Bewegungsvektor 13 und Zielbahn 33 geben das aktuelle sowie das vergangene Bewegungsverhalten an. Im Gegensatz zum A-Ziel 10 weist das B-Ziel 11 ein erheblich größeres Meßunsicherheitsgebiet 34, insbesondere in radialer Richtung auf. Daraus kann der Beobachter erkennen, daß in radialer Richtung größere Meßtoleranzen für die Berechnung des Meßunsicherheitsgebietes 34 zu berücksichtigen waren. Die größeren Meßtoleranzen sind auf die Eigenschaften der Entfernungsmeßanlage zurückzuführen, deren Meßgenauigkeit in Voraus- und Achterausrichtung des eigenen Fahrzeugs gegenüber sietlichen Entfernungsmeßbereichen eingeschränkt ist. Das A-Ziel 10, aber auch das C-Ziel 12 befinden sich seitlich vom eigenen Fahrzeug 3 und somit in Entfernungsmeßbereichen mit geringeren Meßtoleranzen. Das B-Ziel 11 wird vom eigenen Fahrzeug 3 eventuell erst später angegriffen, wenn die Schußposition günstiger ist.

Für die Markierung des A-Ziels 10 und des B-Ziels 11 werden gleiche Symbole verwendet, da sich aufgrund der von den passiven Peil- und Entfernungsmeßanlagen aufgenommenen Empfangssignale bei ihrer Zeit- und/oder Frequenzanalyse und gegebenenfalls der Analyse ihrer zeitlichen Änderungen gleiche Signaleigenschaften ergeben haben. Diese Signaleigenschaften ermöglichen eine Einordnung des Ziels in eine Klasse von Zielen, zum Beispiel Oberflächenschiff, U-Boot, Flugzeugträger und/oder eine Identifizierung, zum Beispiel Fregatte der Bremen-Klasse, die durch den Kreis symbolisch angezeigt wird.

Das A-Ziel 10 weist einen Stern am Buchstaben A zur Kennzeichnung "Doppelziel" auf, da die Zeit- und Frequenzanalyse für die Empfangssignale des A-Ziels 10 ergeben hat, daß sich auf dieser Position in mehrere Klassen einzuordnende Geräuschquellen befinden. Daraus läßt sich schließen, daß die Fregatte beispielsweise einen oder mehrere Täuschkörper hinter sich herschleppt.

Das C-Ziel 12 ist gerade in den Entfernungsbereich der Darstellung der Gefechtslage eingelaufen. Seine aktuelle Position wird im zugehörigen Meßunsicherheitsgebiet 41 durch eine auf der Spitze stehende Raute verdeutlicht. Die Raute kennzeichnet das C-Ziel 12 als U-Bootjäger.

Eine Zielbahn des C-Ziels 12 ist zum Zeitpunkt der Darstellung der Gefechtslage noch nicht anzeigbar. Das C-Ziel 12 ist unter einer rechtweisenden Peilung von 60° dargestellt. Zwischen C-Ziel 12 und eigenem Fahrzeug 3 zeigt ein strichpunktierter Peilstrich 43 an, daß mit der passiven Peilanlage zur Peilung und Auswertung von Empfangssignalen aktiver Sendeanlagen Sendesignale empfangen werden. Wenn sich das C-Ziel 12 mit Kurs zum eigenen Fahrzeug 3 soweit nähert, daß das eigene Fahrzeug 3 durch eine gegnerische Rückstrahlortungsanlage geortet werden kann, wäre eine unmittelbare Gefährdung des eigenen Fahrzeugs 3 gegeben, so daß jetzt eine zusätzliche direkte Warnung durch eine Veränderung der Helligkeit der Markierungen des C-Ziels 12 angezeigt wird.

Da die zur Bekämpfung des A-Ziels 10 eingesetzte Waffe 30 ein drahtgesteuerter Torpedo ist, wird neben der Darstellung der Gefechtslage Steuerbarkeit und Betriebszeit der Waffe 30 als Balkendiagramm 45 graphisch verdeutlicht. Vom Startpunkt 46 bis zum Drahtende 47 kann der Torpedo vom eigenen Fahrzeug 3 gesteuert werden. Der vollständig geschwärzte Bereich 48 kennzeichnet den bereits ausgelaufenen Draht bis zu der in der Gefechtslage angezeigten Position der Waffe 30. Der schraffierte Bereich 49 entspricht der noch vorhandenen Drahtlänge. Ein heller Bereich 51 im Anschluß an das Drahtende 47 zeigt die Restlaufzeit des Torpedos ohne weitere Lenkbarkeit vom eigenen Fahrzeug 3 aus an. Innerhalb des schraffierten Bereichs 49 kennzeichnet ein Propeller 50 den Treffpunkt 31. Der Vorteil besteht darin, daß unabhängig von der angezeigten Bahn 32 in der Darstellung der Gefechtslage die verbleibende Drahtlänge angezeigt werden kann.

In einer Legende 60 sind die in der Darstellung der Gefechtslage ausgewiesenen Symbole angezeigt und durch alphanumerische Begriffe erläutert. Dabei werden neben den Merkmalen zur Identifizierung der Ziele und ihrer Einordnung in eine bekannte Klasse die für das Bewegungsverhalten charakteristischen Parameter als Zahlenwerte angegeben. Die Parameter sind in der Legende exemplarisch aufgeführt, ihre Auswahl ist abhängig von den in der Gefechtslage dargestellten Zielen.

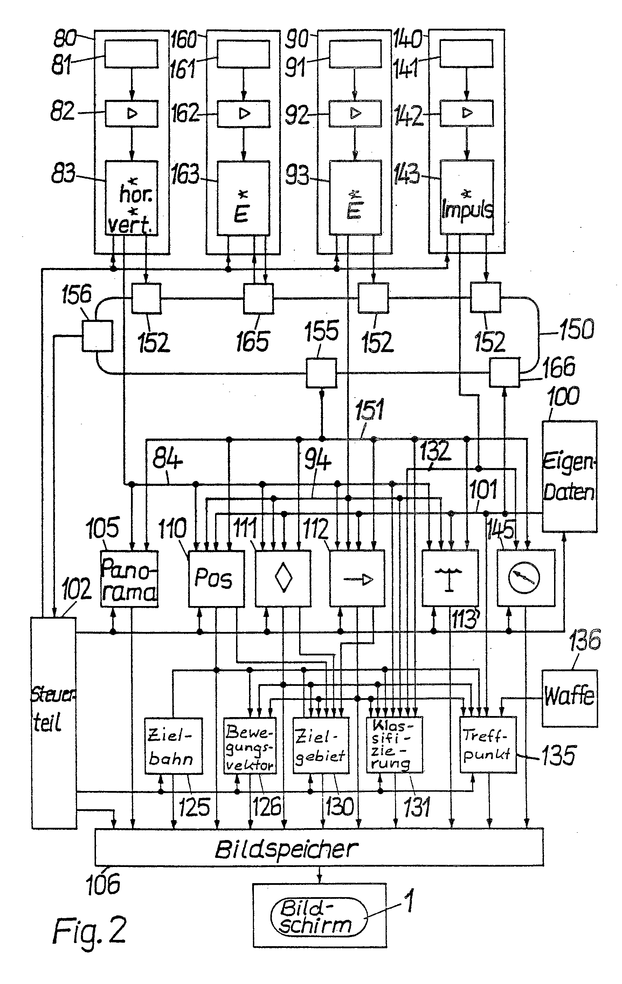

Fig. 2 zeigt ein Blockschaltbild für eine Anlage zur Darstellung einer Gefechtslage entsprechend Fig. 1. Eine Peilanlage 80 ist mit einer Empfangsanordnung 81 ausgestattet, die Geräusche im gesamten Azimutal- und Elevationswinkelbereich aufnimmt. Ihre Signale werden über Vorverstärker 82 auf eine Winkelmeßanlage 83 zum Ermitteln von Winkelinformationen und Empfangssignalen in Azimut und Elevation geschaltet. Ein erster Ausgang der Peilanlage 80 ist mit einer als Sammelschiene ausgebildeten Winkeldatenleitung 84 verbunden.

Eine Entfernungsmeßanlage 90 enthält eine Wandleranordnung 91 mit nachgeschalteten Verstärkern 92 und Verarbeitungseinheit 93. Ein erster Ausgang der Entfernungsmeßanlage 90 ist mit einer Entfernungsdatenleitung 94 verbunden.

Eine Eigendatenanlage 100, die Position, Kurs, Geschwindigkeit und Tiefe des eigenen Fahrzeugs bestimmt, ist über einen Ausgang mit einer Eigendatenleitung 101 und über einen Eingang mit einem Steuergenerator 102 verbunden.

Die Peilanlage 80 und die Entfernungsmeßanlage 90 werden ebenfalls vom Steuergenerator 102 angesteuert.

Eine Steuerschaltung 105 für eine Panoramadarstellung der Empfangssignale über dem Azimut ist an die Winkeldatenleitung 84 angeschlossen und über einen zweiten Eingang mit dem Steuergenerator 102 verbunden. Ihr Ausgang ist mit einem Bildspeicher 106 zusammengeschaltet. Steuerimpulse des Steuergenerators 102 an die Peilanlage 80 bewirken das Ausgeben der Empfangssignale und ihre Übergabe an die Steuerschaltung 105 für eine Panoramadarstellung. In der Steuerschaltung 105 werden die Winkel- und Amplitudeninformationen für einen vollständigen azimutalen Umlauf aufbereitet und als Helligkeitsinformationen an den Bildspeicher 106 übertragen.

Ein Positionsprozessor 110, ein Kursprozessor 111, ein Geschwindigkeitsprozessor 112 und ein Tiefenprozessor 113 sind mit ihren Eingängen für Winkelinformationen an die Winkeldatenleitung 84 mit ihren Eingängen für Entfernungsinformationen an die Entfernungsdatenleitung 94 und mit ihren Eingängen für Eigendaten an die Eigendatenleitung 101 angeschlossen und ausgangsseitig mit dem Bildspeicher 106 zusammengeschaltet. Ihre Steuereingänge sind mit dem Steuergenerator 102 verbunden. Die aktuellen Positionen der Ziele werden vom Positionsprozessor 110 an einen Zielbahnrechner 125 übertragen, der für aktuelle und vorangegangene Positionen Linienelemente für Zielbahnen generiert und als Intensitätssignale in den Bildspeicher 106 überträgt.

Im Tiefenprozessor 11 werden unter Berücksichtigung der Eigendaten die Tiefe getauchter, als Ziel georteter U-Boote ermittelt und an den Bildspeicher 106 übertragen.

Ein Bewegungsvektorrechner 126 übernimmt nach Ansteuerung durch den Steuergenerator 102 die von den Prozessoren 110 bis 112 ermittelten Daten über Position, Kurs und Geschwindigkeit eines Ziels, bestimmt daraus Intensitätssignale für die Anzeige eines Bewegungsvektors und überträgt sie an den Bildspeicher 106.

Positions-, Kurs- und Geschwindigkeitsprozessoren 110 bis 112 berechnen aus ihren Eingangsgrößen zugehörige Meßtoleranzen, die zusammen mit den Daten über Position, Kurs und Geschwindigkeit an einen Zielgebietsrechner 130 übertragen werden, der daraus Meßunsicherheitsgebiete berechnet. Für ausgewählte Ziele werden mit Methoden der Schätzwertrechnung für vorgebbare Zeiten zukünftige Positionen vorausberechnet. Aufgrund der Meßtoleranzen und des bisherigen Bewegungsverlaufes dieser Ziele werden die diesen Positionen zugehörigen Zielerwartungsgebiete bestimmt. Intensitäten für Flächen und Randlinien der Meßunsicherheits- und/oder Zielerwartungsgebiete werden an den Bildspeicher 106 übertragen. Über eine Verbindung zum Steuergenerator 102 werden Steuerbefehle zur Übernahme der Eingangsdaten an den Eingängen des Zielgebietsrechners 130 und zum Auslesen der Intensität an den Bildspeicher 106 übertragen.

Eine Impulspeilanlage 140 besteht aus einer Wandlerkonfiguration 141 mit nachgeschaltete Impulsverstärker 142 und einer Impuls-auswertungsanlage 143 zur Auswertung fremder Sendeenergie bezüglich ihrer Einfallsrichtung und ihres zeitlichen Verlaufs. Eine Peilstricheinheit 145 ist an eine Impulsdatenleitung 132, die mit der Impulspeilanlage 140 verbunden ist, angeschlossen und erzeugt auf dem Bildschirm 1 eine Verbindungslinie vom eigenen Fahrzeug zum Ziel.

Eingänge eines Klassifizierungsrechners 131 sind mit dem Positionsprozessor 110, dem Kursprozessor 111, dem Geschwindigkeitsprozessor 112 sowie der Winkeldatenleitung 84, der Entfernungsdatenleitung 94 und der Impulsdatenleitung 132 verbunden. Steuerbefehle des Steuergenerators 102, die über einen Steuereingang in den Klassifizierungsrechner 131 eingegeben werden, bewirken die Analyse seiner Eingangssignale hinsichtlich ihres Zeit- und Frequenzverhaltens sowie ihrer zeitlichen Veränderungen.

Da Ziele nur bestimmte für ihren Typ charakteristische Bewegungen oder Bewegungsänderungen durchführen können und da andererseits Fahrzeuge bekannte oder aber charakteristische, veränderbare Geräusche oder aktive Sendeanlagen charakteristische Impulse abstrahlen, werden diese Merkmale im Klassifizierungsrechner 131 ermittelt und mit bekannten Signalmustern verglichen. Der Vergleich führt zu einer Einordnung des Ziels in eine bekannte Klasse von Zielen oder zu einer exakten Identifizierung, so daß dem Ziel ein für diese Einordnung vereinbartes Symbol zugeordnet werden kann, dessen Intensitäten in den Bildspeicher 106 eingeschrieben werden.

Enthalten die Empfangssignale Merkmale von Zielen, die auf eine Gefährdung des eigenen Fahrzeugs hindeuten, z.B. charakteristische Geräuschspektren einer Waffe oder Impulse einer aktiven Sendeanlage, so werden Intensitäten für ein an der Position des Ziels zusätzlich angebrachtes Symbol als Warnanzeige, zum Beispiel der Stern am A-Ziel in Fig. 1, mit einer Erläuterung in der Legende oder sich rhythmisch verändernde Helligkeiten der Markierungen von Zielen an den Bildspeicher 106 ausgegeben.

Der Positions-, der Kurs- und der Geschwindigkeitsprozessor 110 bis 112 sind ferner an einen Treffpunktrechner 135 angeschlossen. Der Treffpunktrechner 135 ist weiterhin mit der Eigendatenleitung 101 und einer Waffensteuerung 136 verbunden, die Kenndaten einer einsetzbaren Waffe überträgt. Der Treffpunktrechner 135 berechnet aus seinen Eingangssignalen einen voraussichtlichen Treffpunkt und generiert Intensitäten für die Darstellung eines Treffpunktsymbols und einer Bahnlinie, die an den Bildspeicher 106 übertragen werden.

Der Bildspeicher 106 ist über eine Steuerleitung mit dem Steuergenerator 102 verbunden, über die er Lesebefehle zur Aufnahme der Intensitäten in den Bildspeicher 106 und Schreibbefehle zum Auslesen des Bildspeicherinhalts zur Anzeige auf dem Bildschirm 1 erhält.

Die Betriebssicherheit der Anlage zur Darstellung der Gefechtslage wird dadurch erhöht, daß die Peilanlage 80, die Entfernungsmeßanlage 90 und die Impulspeilanlage 140 außer den direkten Verbindungen mit der Winkeldatenleitung 84, Entfernungsdatenleitung 94 und Impulsdatenleitung 132 über eine Ringleitung 150 mit einer Sammeldatenleitung 151 verbunden sind. Die Peilanlage 80, die Entfernungsmeßanlage 90 und die Impulspeilanlage 140 werden über Koppeleinheiten 152 an die Ringleitung 150 angeschlossen und durch Steuerbefehle des Steuergenerators 102 veranlaßt, Winkel- und Entfernungsinformationen über die Koppeleinheiten 152 an die Ringleitung 150 abzusetzen. Dazu sind die Koppeleinheiten 152 mit Empfänger und Sender sowie zusätzlichen Einkopplungs- und Synchronisierschaltungen ausgestattet. Die Übergabe der Daten an die Sammeldatenleitung 151 erfolgt durch eine Koppelstufe 155.

Die Steuerschaltung 105, der Positionsprozessor 110, der Kursprozessor 111, der Geschwindigkeitsprozessor 112, der Tiefenprozessor 113, die Peilstricheinheit 145 und der Klassifizierungsrechner 131 sind mit zusätzlichen Eingängen an die Sammeldatenleitung 151 angeschlossen und werden durch Adressbits, die den Winkel- und Entfernungsinformationen zugeordnet sind, zur Übernahme der Winkel- und Entfernungsinformationen aktiviert. Zur Steuerung und Überwachung ist die Ringleitung 150 über eine Steuerkoppelstufe 156 an den Steuergenerator 102 angeschaltet.

Die Ermittlung von Winkel- und Entfernungsinformationen ist für die Darstellung der Gefechtslage von so vorrangiger Bedeutung, daß eine Ersatzpeilanlage 160 vorgesehen ist. Sie enthält eine Ersatzempfangsanordnung 161, der Ersatzverstärker 162 und eine Ersatzmeßanlage 163 nachgeschaltet sind. Die Ersatzpeilanlage 160 ist über einen Eingang und einen Ausgang mit einer Ersatzkoppelstufe 165 der Ringleitung 150 verbunden und vom Steuergenerator 102 ansteuerbar. Die Ersatzmeßanlage 163 liefert Winkelinformationen für Wellenenergie abstrahlende Ziele und ermittelt nach dem Prinzip der Versegelungspeilung unter Berücksichtigung der Eigendaten des eigenen Fahrzeugs ebenfalls die Entfernungsinformationen. Die benötigten Eigendaten werden dazu über eine Eigendatenkopplung 166 von der Eigendatenleitung 110 in die Ringleitung 150 zur Übertragung an die Ersatzpeilanlage 160 eingekoppelt.

Nicht dargestellt sind in dem Steuergenerator 102 vorhandene Testprüfsysteme, die die Funktion der Peil-, Ersatzpeil-, Entfernungsmeß- und Impulspeilanlage 80, 160, 90 und 140, der Prozessoren 110 bis 113 und der Rechner 125 bis 131 und 135 überprüfen. Die Betriebssicherheit der Anlage kann nun noch dadurch wesentlich erhöht werden, daß zwischen Vorverstärkern 82 und Winkelmeßanlage 83 der Peilanlage 80 eine Multiplexschaltung (nicht dargestellt) zwischengeschaltet wird, deren zweiter Eingang mit einem zweiten Ausgang der Ersatzverstärker 162 der Ersatzpeilanlage 160 verbunden ist. Bei Ausfall der Empfangsanordnung 81 oder der Vorverstärker 82 wird durch die Multiplexschaltung auf die Ersatzempfangsanordnung 161 und ihre Ersatzverstärker 162 umgeschaltet und eine Verbindung zur Winkelmeßanlage 83 der Peilanlage 80 hergestellt. Damit ist die Ermittlung der Winkelinformation durch die leistungsfähigere Winkelmeßanlage 83 gegeben, die nun die empfangenen Geräusche über die Ersatzempfangsordnung 161 und Ersatzverstärker 162 erhält. Bei weitgehend gleichem Aufbau der Winkelmeßanlage 83 und der Ersatzmeßanlage 163 für die Bildung von Winkelinformationen sind dadurch weitere Ersatzbetriebsfunktionen vorgesehen, daß durch Zwischenschaltung zusätzlicher Multiplexeinheiten Schaltungen, wie Filter, Integrierer oder Verarbeitungsprozessoren durch jeweils gleiche Funktionen der Ersatzmeßanlage 163 und umgekehrt ersetzt werden können.

**Patentansprüche**

1. Vorrichtung zum Erzeugen eines Lagebildes einer Gefechtslage auf See mit mindestens einer Wasserschallhorchanlage zum Messen von Zieldaten, nämlich Messen von Peilung und Entfernung, von Wellenenergie abstrahlenden Zielen (10—12), wie Fremdfahrzeugen und abgefeuerten, eigenen Unterwasserwaffen, und mit einem Aufzeichnungsgerät, dadurch gekennzeichnet, daß zeittaktgesteuerte Prozessoren (110, 111, 112) zur Berechnung von Position, Kurs und Geschwindigkeit der Ziele eingangsseitig einerseits mit der Wasserschallhorchanlage (80, 90) und andererseits mit einer Eigendatenanlage (100) verbunden sind, daß den Prozessoren (110, 111, 112) ein Bewegungsvektorrechner (126), der von Zielpositionen ausgehende Vektorsymbole (13) mit einer der Zielgeschwindigkeit entsprechenden Länge und einer dem Kurs entsprechenden Richtung generiert, ein Zielbahnrechner (125), der für in vorgegebenen Zeitintervallen berechnete Positionen jeweils eines Ziels Linienelemente generiert und zu jeweils einer Zielbahn (17, 33) zusammenstellt, ein Zielgebietsrechner (130), der aus Meßtoleranzen der Zieldaten Meßunsicherheitsgebiete (16, 34, 41) bestimmt und für diese jeweils eine Zielposition einschließende Umgebungsflächen oder Randlinien generiert, und ein Klassifizierungsrechner (131), der aus Zieldaten, wie Zielpositionsänderungen, und Eigenschaften der Empfangssignale der Wasserschallhorchanlage (80, 90, 140, 160) an der aktuellen Zielposition zielspezifische Markierungen (5.60) generiert, nachgeschaltet sind, daß das Aufzeichnungsgerät einen Bildspeicher (106) und ein elektronisches Anzeigegerät mit Bildschirm (1) zum Darstellen des Bildspeicherinhalts aufweist und daß die Rechner (125, 126, 130, 131) ausgangsseitig mit Adreß- und Dateneingängen des Bildspeichers (106) verbunden sind, so daß Vektorsymbole, Zielbahnen, Umgebungsflächen bzw. Randlinien und Markierungen als Intensitäten positionsgerecht im Bildspeicher (106) abgespeichert sind.

2. Vorrichtung nach Anspruch 1, dadurch gekennzeichnet, daß der Zielgebietsrechner (130) derart ausgebildet ist, daß er für vorgebbare Zeiten aus aktueller Zielposition, Zielkurs und Zielgeschwindigkeit sowie deren Meßtoleranzen und zeitlichen Änderungen der Meßtoleranzen Zielerwartungsgebiete (18, 19) für auswählbare Ziele berechnet und für diese Flächen und Umgrenzungslinien generiert.

3. Vorrichtung nach Anspruch 1 oder 2, dadurch gekennzeichnet, daß der Klassifizierungsrechner (131) alphanumerische Zeichen generiert, den Markierungen zuordnet und aus den Zuordnungen weitere Ausgangssignale bildet, und daß die weiteren Ausgangssignale als Intensitäten in dem Bildspeicher (106) derart abgespeichert sind, daß diese Intensitäten beim Darstellen des Speicherinhalts auf dem Bildschirm (1) in Form einer Legende (60) abgesetzt vom Lagebild (2) erscheinen.

4. Vorrichtung nach einem der Ansprüche 1 bis 3, dadurch gekennzeichnet, daß ein Tiefenprozessor (113) vorgesehen ist, an dessen Eingängen einerseits die Zieldaten, Peilung, Entfernung und Elevationswinkel, und andererseits die von der Eigendatenanlage (100) ausgegebenen Eigendaten anstehen, daß der Tiefenprozessor (113) aus den Eingangsdaten die Zieltiefe berechnet und ein Zieltiefensymbol (t) am Ort der Zielposition generiert, und daß der Tiefenprozessor (113) mit dem Bildspeicher (106) derart verbunden ist, daß Zieltiefe und Zieltiefensymbol (t) als Intensitäten im Bildspeicher (106) abgelegt sind.

5. Vorrichtung nach einem der Ansprüche 1 bis 4, dadurch gekennzeichnet, daß eine weitere Wasserschallhorchanlage (Impulspeilanlage 140) zum Peilen und Ausgeben des Zeitlichen Verlaufs von Empfangssignalen aktiver Zielsendeanlagen vorgesehen ist, daß an der weiteren Wasserschallhorchanlage (Impulspeilanlage 140) der Klassifizierungsrechner (131) zum Ermitteln weiterer Zieldaten, wie Frequenz, Impulsdauer und Pegel der Zielsendeanlagen, und eine Peilstricheinheit (145) angeschlossen sind, daß die Peilstricheinheit (145) in Einfallsrichtung der Sendeenergie der Zielseadeanlagen ausgerichtete Peilstriche (43) generiert, und daß die Peilstricheinheit (145) mit dem Bildspeicher (106) derart verbunden ist, daß die Peilstriche (43) als Intensitäten positionsgerecht im Bildspeicher (106) abgespeichert sind.

6. Vorrichtung nach einem der Ansprüche 1 bis 5, dadurch gekennzeichnet, daß der Klassifizierungsrechner (131) einen Analysator aufweist, der in einer Zeit- und/oder Frequenzanalyse der Empfangssignale der Wasserschallhorchanlagen (80, 90, 140, 160) Zeitverläufe der Empfangssignale, Frequenzspektren und deren zeitlichen Änderungen bestimmt, und eine Vergleichseinheit aufweist, welche die Ausgangssignale des Analysators mit entsprechenden Signalen bekannter Ziele vergleicht und damit die spezifischen Markierungen für das jeweils identifizierte Ziel bestimmt.

7. Vorrichtung nach einem der Ansprüche 1 bis 6, dadurch gekennzeichnet, daß eine Waffensteuerung (136) für Kenndaten eingesetzter Waffen vorgesehen ist, daß mit der Waffensteuerung (136), den Prozessoren (110, 111, 112) und der Eigendatenanlage (100) ein Treffpunktrechner (135) verbunden ist, der ein Treffpunktsymbol (31), eine Bahnlinie (32) der abgefeuerten Waffe und einen der Reichweite mit und ohne Fernlenkung entsprechenden Balken (45) generiert, daß das Treffpunktsymbol (31), die Bahnlinie (32) und der Balken (45) als Intensitäten im Bildspeicher (106) derart abgespeichert sind, daß bei Darstellung des Speicherinhalts auf dem Bildschirm (1) das Treffpunktsymbol (31) und die Bahnlinie (32) im Lagebild (2) und der Balken (45) davon abgesetzt erscheinen.

8. Vorrichtung nach einem der Ansprüche 1 bis 7, dadurch gekennzeichnet, daß die Wasserschallhorchanlagen (80, 90, 140) über Koppeleinheiten (152) an eine Ringleitung (150) angeschlossen sind, der über eine Koppelstufe (155) die Prozessoren (110, 111, 112, 113) und der Klassifizierungsrechner (131) nachgeschaltet sind, daß ein Steuergenerator (102) vorgesehen ist, der Steuerbefehle an die Wasserschallhorchanlagen (80, 90, 140) sowie die Prozessoren (110, 111, 112, 113), die Rechner (125, 126, 130, 131) und den Bildspeicher (106) überträgt, daß der Steuergenerator (102) über eine Steuerkoppelstufe (156) mit der Ringleitung (150) verbunden ist, daß eine Ersatzpeilanlage (160) über eine Ersatzkoppelstufe (165) an die Ringleitung (150) angeschlossen ist, daß die die Peilung messende wasserschallhorchanlage (80) und die Ersatzpeilanlage (160) aus Wandleranordnungen (81, 161) und Signalverarbeitungsschaltungen (82, 83, 162, 163) gleichartig zusammengeschaltet sind, wobei die Schaltungen (162, 163) der Ersatzpeilanlage von geringerer Leistungsfähigkeit sind, daß zwischen den einzelnen Signalvorarbeitungsschaltungen (82, 83, 162, 163) Multiplexschaltungen zwischengeschaltet sind, deren Eingänge mit vorhergehenden Signalverarbeitungsschaltungen (82, 162) der Wasserschallhoranlage (80) und der Ersatzpeilanlage (160) und deren Ausgänge mit nachfolgenden Signalverarbeitungsschaltungen (83, 163) verbunden sind, daß der Steuergenerator (102) fehlerhafte Signalverarbeitungsschaltungen erkennt und die Multiplexschaltungen so ansteuert, daß die fehlerhaften Signalverarbeitungsschaltungen umgangen werden.

**Revendications**

1. Dispositif pour obtenir une image d'ensemble d'une situation tactique en mer, comportant au moins une installation de détection acoustique sousmarine servant à mesurer des données, à savoir le relèvement et la distance, de cibles (10—12) émettant une énergie d'ondes, telles que des navires étrangers et des armes sous-marines particulières tirées, et comportant un appareil d'enregistrement, caractérisé en ce que des unités de traitement (110, 111, 112), qui sont commandées d'une manière cadencée dans le temps et servent à calculer la position, le cap et la vitesse des cibles, sont reliées du côté entrée d'une part à l'installation (80, 90) de détection acoustique sous-marine et d'autre part à une installation (100) de traitement des données d'un navire particulier, qu'en aval des unités de traitement (110, 112, 111) se trouvent branchés un calculateur de vecteurs de déplacement (126), qui produit des symboles en forme de vecteurs (13) partant de positions de cibles et possédant une longueur correspondant à la vitesse de la cible et une direction correspondant au cap, un calculateur de trajectoires de cibles (125), qui produit des segments pour des positions d'une cible respective, calculées pendant des intervalles de temps prédéterminés, et les réunit pour former une trajectoire respective de la cible (17, 33), un calculateur de zones de cibles (130), qui détermine des zones d'incertitude de mesure (16, 34, 41) à partir de tolérances de mesure des données de cibles et produit pour ces zones des surfaces d'entourage ou des lignes marginales entourant une position de cible, et un calculateur de classification (131) qui produit des repères de marquage (voir 60) spécifiques aux cibles, dans la position réelle des cibles à partir des données de ces dernières, telles que des variations des positions des cibles, et à partir des caractéistiques et des signaux de réception de l'installation de détection sous-marine acoustique (80, 90, 140, 160), que l'appareil d'enregistrement possède une mémoire d'images (106) et un appareil d'affichage électronique muni d'un écran (1) pour la représentation du contenu de la mémoire d'images et que les calculateurs (125, 126, 130, 131) sont reliés, du côté sortie, à des entrées d'adresses et de données de la mémoire d'images (106) de sorte que des symboles de vecteurs, des trajectoires de cibles, des surfaces d'entourage ou des lignes marginales et des repères de marquage sont mémorisés sous la forme d'intensité dans des positions correctes dans la mémoire d'images (106).

2. Dispositif selon la revendication 1, caractérisé en ce que le calculateur des zones de cibles (130) est agencé de telle sorte que, pour des intervalles de temps prédéterminés, il calcule à partir de la position, du cap et de la vitesse actuelle des cibles ainsi que des tolérances de mesure sur ces dernières et de variations dans le temps des tolérances de mesure, des zones d'espérance de cibles (18, 19) pour des cibles pouvant être choisies et produit des surfaces et des lignes d'entourage pour ces surfaces.

3. Dispositif selon la revendication 1 ou 2, caractérisé en ce que le calculateur de classification (131) produit des caractères alphanumériques, les associe aux repères de marquage et forme d'autres signaux de sortie à partir des associations, et que les autres signaux de sortie sont mémorisés sous la forme d'intensités dans la mémoire d'images (106) de telle sorte que, lors de la représentation du contenu de la mémoire sur l'écran (1), ces intensités apparaissent sous la forme d'une légende (60) tirées de l'image d'ensemble (2).

4. Dispositif selon l'une des revendications 1 à 3, caractérisé en ce qu'il est prévu une unité (113) de traitement de la profondeur, aux entrées de laquelle sont appliqués d'une part les données des cibles, le relèvement, la distance et l'angle de l'élévation, et d'autre part les données du navire particulier délivrées par l'installation (100) de transmission de données du navire particulier, que l'unité (113) de traitement de la profondeur calcule la profondeur des cibles à partir des données d'entrée et produit un symbole (t) de la profondeur de la cible au niveau de cette dernière et que l'unité (113) de traitement de la profondeur est reliée à la mémoire d'images (106) de telle sorte que la profondeur de la cible et le symbole (t) de cette profondeur sont mémorisés sous la forme d'intensités dans la mémoire d'images (106).

5. Dispositif selon l'une des revendications 1 à 4, caractérisé en ce qu'il est prévu une autre installation de détection acoustique sousmarine (installation 140 de détection d'impulsions) servant à repérer et à fournir la variation dans le temps de signaux de réception d'installations émettrices actives des cibles, qu'à cette autre installation de détection acoustique sousmarine (installation 140 de détection d'impulsions) se trouvent raccordés le calculateur de classification (131) servant à déterminer d'autres données de cibles, telles que la fréquence, la durée d'impulsions et le niveau des installations émettrices de cibles, et une unité (145) de production de traits de repérage, que cette unité (145) produit des traits de repérage (43) orientés suivant la direction d'incidence de l'énergie émise par des installations émettrices de cibles, et que l'unité (145) produisant des traits de repérage est reliée à la mémoire d'images (106) de telle sorte que les traits de repérage (43) sont numérisés sous la forme d'intensités, d'une manière correcte en position, dans la mémoire d'images (106).

6. Dispositif selon l'une des revendications 1 à 5, caractérisé en ce que le calculateur de classification (131) comporte un analyseur qui détermine des variations dans le temps des signaux d'entrée, des spectres de fréquences de leurs variations dans le temps lors d'une analyse temporelle et/ou fréquentielle des signaux de réception des installations de détection acoustique sous-marine (80, 90, 140, 160), et comporte une unité de comparaison qui compare les signaux de sortie de l'analyseur à des signaux correspondants de cibles connues et déterminent par conséquent les repères de marquage spécifiques pour la cible identifiée.

7. Dispositif suivant l'une des revendications 1 à 6, caractérisé en ce qu'il est prévu un dispositif (136) de commande d'armes pour des données caractéristiques d'armes utilisées, qu'au dispositif (136) de commande d'armes, aux unités de traitement (110, 111, 112) et à l'installation (100) de transmission de données particulières se trouve relié un calculateur de points d'impact (135) qui produit un symbole (31) du point d'impact, une trajectoire (32) de l'arme tirée et un trait (45) correspondant à la portée avec et sans téléguidage, que le symbole (31) du point d'impact, la trajectoire (32) et le trait (45) sont mémorisés sous la forme d'intensités dans la mémoire d'images (106) de telle sorte que, lors de la représentation du contenu de la mémoire sur l'écran (1), le symbole (31) du point d'impact et la trajectoire (32) apparaissent dans l'image d'ensemble (2) et que le trait (45) en est retiré.

8. Dispositif selon l'une des revendications 1 à 7, caractérisé en ce que les installations (80, 90, 140) de détection acoustique sous-marine sont raccordées à une ligne annulaire (150) par l'intermédiaire d'unités de couplage (152) en aval desquelles sont branchées, par l'intermédiaire d'un étage de couplage (155) les unités de traitement (110, 111, 112, 113) et le calculateur de classification (131), qu'il est prévu un générateur de commande (102) qui transmet des instructions de commande aux installations de détection acoustique sous-marine (80, 90, 140) ainsi qu'aux unités de traitement (110, 111, 112, 113), aux calculateurs (125, 126, 130, 131) et à la mémoire d'images (106), que le générateur de commande (102) est relié à la ligne annulaire (150) par l'intermédiaire d'un étage de couplage de commande (156), qu'une installation de relèvement de rechange (160) est raccordée par l'intermédiaire d'un étage de couplage de rechange (165) à la ligne annulaire (150), que l'installation (80) de détection acoustique sous-marine, qui détermine le relèvement, et l'installation de relèvement de rechange (160) sont formées de la même manière par la réunion de dispositifs transducteurs (81, 161) et de circuits (82, 83, 162, 163) de traitement de signaux, les circuits (162, 163) de l'installation de relèvement de rechange possédant une capacité potentielle plus faible, qu'entre les différents circuits de traitement de signaux (82, 83, 162, 163) se trouvent interconnectés des circuits de multiplexage dont les entrées sont reliées à des circuits précédents de traitement de signaux (82, 162) de l'installation (80) de détection acoustique sous-marine et à l'installation de relèvement de rechange (160), et dont les sorties sont reliées à des circuits aval de traitement de signaux (83, 163), et que le générateur de commande (102) identifie des circuits défectueux de traitement des signaux et commande les circuits de multiplexage de manière à éviter les circuits défectueux de traitement de signaux.

**Claims**

1. Device for generating a situation image of a combat situation at sea with at least one hydrophone installation for the measurement of target data, namely measurement of bearing and range, of targets (10—12) which radiate wave energy, such as strange craft and own fired underwater weapons, and a recording appliance, characterised in that timing-pulse-controlled processors (110, 111, 112) for the computation of position, course and speed of the targets are connected on the input side on the one hand with the hydrophone installation (80, 90) and on the other with an own data installation (100), in that in series after the processors (110, 111, 112) there are connected a movement vector computer (126), which generates vector symbols (13) issuing from target positions with a length corresponding to the target speed and a direction corresponding to the course, a target path computer (125) which for positions calculated at predetermined time intervals, of one line in each case, generates line elements and assembles them in each case into a target path (17, 33), a target area computer (130) which determines measurement uncertainty areas (16, 34, 41) out of measurement tolerances of the target data and for these generates surrounding surfaces or edge lines each enclosing a target position, and a classification computer (131) which generates markings (see 60) specific to the target from target data, such as target position variations, and properties of the received signals of the hydrophone installation (80, 90, 140, 160), at the current target position, in that the recording appliance comprises an image store (106) and an electronic display apparatus with image screen (1) for the display of the image store content, and in that the computers (125, 126, 130, 131) are connected on the output side with address and data inputs of the image store (106), so that vector symbols, target paths, surrounding surfaces or edge lines and markings are stored as intensities in correct position in the image store (106).

2. Device according to Claim 1, characterised in that the target area computer (130) is formed so that for prestatable times it calculates target expectation areas (18, 19) for selectable targets from current target position, target course and target speed and their measurement tolerances and time variations of the measurement tolerances, and generates surfaces and defining lines for these areas.

3. Device according to Claim 1 or 2, characterised in that the classification computer (131) generates alpha-numerical signs, allocates them to the markings and from the allocations forms further output signals, and in that the further output signals are stored as intensities in the image store (106) in such a way that these intensities appear in the form of a legend (60) separately from the situation image (2), in the display of the store content on the image screen (1).

4. Device according to one of Claims 1 to 3, characterised in that a depth processor (113) is provided on the inputs of which on the one hand the target data, bearing, range and angle of elevation, and on the other hand the own data issued by the own data installation (100) are present, in that the depth processor (113) calculates the target depth from the input data and generates a target depth symbol (t) at the location of the target position, and in that the depth processor (113) is connected with the image store (106) in such a way that target depth and target depth symbol (t) are deposited as intensities in the image store (106).

5. Device according to one of Claims 1 to 4, characterised in that a further hydrophone installation (pulse direction-finding installation 140) is provided for direction-finding and issue of the time course of received signals of active target transmission installations, in that to the further hydrophone installation (pulse direction-finding installation 140) there are connected the classification computer (131) for ascertaining further target data such as frequency, pulse duration and level of the target transmission installation and a bearing stroke unit (145), in that the bearing stroke unit (145) generates bearing strokes (43) oriented in the direction of incidence of the transmission energy of the target transmission installations, and in that the bearing stroke unit (145) is connected with the image store (106) in such a way that the bearing strokes (43) are stored as intensities in correct position in the image store (106).

6. Device according to one of Claims 1 to 5, characterised in that the classification computer (131) comprises an analyser which in a time and/or frequency analysis of the received signals of the hydrophone installations (80, 90, 140, 160) determines time courses of the received signals, frequency spectra and their time variations and comprises a comparison unit which compares the output signals of the analyser with corresponding signals of known targets and thus determines the specific markings for the target identified in each case.

7. Device according to one of Claims 1 to 6, characterised in that a weapon control system (136) for characteristic data of utilised weapons is provided, in that with the weapon control system (136), the processors (110, 111, 112) and the own data installation (100) there is connected a point of impact computer (135) which generates a point of impact symbol (31), a path line (32) of the fired weapon and a beam (45) corresponding to the range with and without remote steering, in that the point of impact signal (31), the path line (32) and the beam (45) are stored as intensities in the image store (106) in such a way that in the representation of the store content on the image screen (1) the point of impact symbol (31) and the path line (32) appear in the situation image (2) and the beam (45) appears separately therefrom.

8. Device according to one of Claims 1 to 7, characterised in that the hydrophone installations (80, 90, 140) are connected through coupler units (152) to a ring lead (150) in series after which the processors (110, 111, 112, 113) and the classification computer (131) are connected through a coupler stage (155), in that a control generator (102) is provided which conveys control commands to the hydrophone installations (80, 90, 140), the processors (110, 111, 112, 113), the computers (125, 126, 130, 131) and the image store (106), in that the control generator (102) is connected through a control coupler stage (156) with the ring lead (150), in that a substitute direction-finding installation (160) is connected through a substitute coupler stage (165) to the ring lead (150), in that the hydrophone installation (80) measuring the bearing and the substitute direction-finding installation (160) are connected together from transducer arrangements (81, 161) and signal-processing circuits (82, 83, 162, 163) in like manner, the circuits (162, 163) of the substitute direction-finding installation being of lower performance capacity, in that between the individual signal-processing circuits (82, 83, 162, 163) there are interposed multiplex circuits the inputs of which are connected with preceding signal-processing circuits (82, 162) of the hydrophone installation (80) and of the substitute direction-finding installation (160) and the outputs of which are

**0 031 110**

connected with subsequent signal-processing circuits (83, 163), and in that the control generator (102) recognises defective signal-processing circuits and actuates the multiplex circuits so that the defective signal-processing circuits are by-passed.

Fig.1

0031110

Fig. 2